Europäisches Patentamt

European Patent Office

Office européen des brevets

(11) Veröffentlichungsnummer: **0 180 088**
**B1**

(12) **EUROPÄISCHE PATENTSCHRIFT**

(45) Veröffentlichungstag der Patentschrift: **16.05.90**

(21) Anmeldenummer: **85113070.8**

(22) Anmeldetag: **15.10.85**

(51) Int. Cl.⁵: **A 01 B 79/00,** A 01 C 23/02, A 01 B 13/08

(54) **Vorrichtung zum Aufbrechen, Verbauen, Düngen und Heilen pflanzenbaulich genutzten Bodens.**

(30) Priorität: **27.10.84 DE 3439380**
**17.08.85 DE 3529551**

(43) Veröffentlichungstag der Anmeldung:
**07.05.86 Patentblatt 86/19**

(45) Bekanntmachung des Hinweises auf die
Patenterteilung:
**16.05.90 Patentblatt 90/20**

(84) Benannte Vertragsstaaten:
**AT BE CH DE FR GB IT LI LU NL SE**

(56) Entgegenhaltungen:
**WO-A-84/02251**
**GB-A-1 379 647**

(73) Patentinhaber: **Zinck, Eugen**
**Hüffelsheimer Strasse 2**
**D-6550 Bad Kreuznach (DE)**

(72) Erfinder: **Zinck, Eugen**
**Hüffelsheimer Strasse 2**
**D-6550 Bad Kreuznach (DE)**

(74) Vertreter: **Jackisch, Walter, Dipl.-Ing. et al**
**Patentanwalt W. Jackisch & Partner**
**Menzelstrasse 40**
**D-7000 Stuttgart 1 (DE)**

Courier Press, Leamington Spa, England.

## Beschreibung

Die Erfindung betrifft eine Vorrichtung mit den Merkmalen des Oberbegriffs des Anspruchs 1 sowie ein Verfahren zum Aufbrechen pflanzenbaulich genutzten Bodens.

Bei einer bekannten Vorrichtung dieser Art (WO—A—84/02251) erfolgt das Aufbrechen des pflanzenbaulich genutzten Bodens mittels einer Sonde, durch die über ein Schnellschlußventil schlagartig Druckluft und über ein Injektionsventil ein Substrat in den Boden eingebracht wird. Das Schnellschlußventil befindet sich im oberen und das Injektionsventil im unteren Bereich eines Zwischenbehälters, der das Substrat enthält. Dem Schnellschlußventil ist ein Injektorrohr nachgeordnet, das sich bei geöffnetem Schnellschlußventil von einem Injektorventilsitz des Zwischenbehälters zur Freigabe des Injektionsventils abhebt. Zum Öffnen und Schließen ist das Schnellschlußventil mit dem Kolben eines pneumatischen Zylinders und das Injektorrohr über eine Hubstange mit dem Hubkolben eines weiteren druckluftbetriebenen Zylinders gekoppelt. Außerdem ist das Druckgeschehen im Injektorrohr über eine Luftleitung mit einer vom Hubkolben mitbegrenzten Staudruckkammer des Druckluftzylinders für eine zeitlich verzögerte Freigabe des Injektionsventils verbunden. Zudem sind an den beiden pneumatischen Zylindern Steuerdruckleitungen angeschlossen.

Bei den praktischen Anwendungen der Vorrichtung ist et notwendig, daß das Injektionsventil bis zum Zeitpunkt seiner Öffnung mit großer Kraft möglichst dicht verschlossen bleibt und daß das Öffnen des Injektionsventils exakt nach dem Aufbruch des Bodens erfolgt. Bei geöffnetem Injektionsventil soll das Substrat unter Vermeidung von Verstopfungen oder dgl. möglichst störungsfrei aus dem Zwischenbehälter in den aus dem Injektorrohr austretenden Luftstrom gelangen und nach erfolgtem Substrateintrag in den Boden soll in möglichst kurzer Zeit ein staudruckgestützter Verschluß des Injektionsventils erfolgen.

Die Aufgabe der Erfindung besteht darin, eine Vorrichtung mit den Merkmalen des Oberbegriffs des Anspruchs 1 und ein Verfahren mit dieser Vorrichtung dahingehend weiterzubilden, daß zur Anpassung an die heterogenen Bodenverhältnisse die Sensibilität der druckabhängigen Steuerfunktionen für einen optimalen Verfahrensablauf erhöht wird, wobei insbesondere die zeitliche Differenz zwischen dem Öffnen des Schnellschlußventils und dem Injektionsventil infolge Trennung ihrer Funktionen genau bestimmbar ist.

Diese Aufgabe wird erfindungsgemäß bei einer Vorrichtung mit den Merkmalen des Oberbegriffs durch die kennzeichnenden Merkmale des Anspruchs 1 und bei einem Verfahren mit dieser Vorrichtung durch die Kennzeichnungsmerkmale des Anspruchs 15 gelöst.

Es hat sich gezeigt, daß nach dem Öffnen des Injektionsventils trotz der hohen Geschwindigkeit des Luftstromes im Injektionsraume ein Druck z.B. zwischen 2 und 3 bar entsteht. Während der Zeit, in der dieser Gegendruck entsteht, kann zwangsläufig kein Substrat an den Luftstrom angrenzen und von diesem mitgerissen werden. Dies ist deshalb nicht ganz zufriedenstellend, da gerade kurz nach dem Öfnen des Injektionsventils die maximale Geschwindigkeit der Luft bei dem dieser Geschwindigkeit entsprechenden Restdruck der strömenden Luft die maximale Transportfähigkeit verleihen und in diesem Augenblick auch Klüfte, Risse und Poren des Bodens maximal geweitet sind. Erst nach dem Druckausgleich zwischen dem Behälterdruck und dem Strahldruck kann das Substrat vom Luftstrom mitgerissen und durch die Sonde in den durch den vorausgegangen Luftdruckstoß aufgebrochenen Boden eingetragen werden. Dabei ist der Luftdruck jedoch bereits erheblich abgesunken, so daß zwangsläufig auch die Luftgeschwindigkeit beträchtlich abgenommen hat und die Einbringung des Substrates nicht optimal sein kann.

Eine weitere Aufgabe der Erfindung besteht darin, eine Vorrichtung mit den Merkmalen des Oberbegriffs des Anspruchs 1 dahingehend weiterzubilden, daß eine optimale Durchdringung und Verbauung des aufgebrochenen Bodenvolumens mit bevorzugt hohem Luftdruck und besonders hoher Luftgeschwindigkeit erzielt wird.

Diese Aufgabe wird erfindungsgemäß durch die kennzeichnenden Merkmale des Anspruchs 7 gelöst.

Bevorzugte Ausgestaltungen und Weiterbildungen sowie weitere Vorteile und wesentliche Einzelheiten der Erfindung sind den Merkmalen der Unteransprüche, der nachfolgenden Beschreibung und der Zeichnung zu entnehmen, die in schematischer Darstellung bevorzugte Ausführungsformen als Beispiels zeigt. Es stellen dar:

Fig. 1 eine teilweise geschnittene Seitenansicht einer erfindungsgemäßen Vorrichtung mit seitlich versetzt gezeichnetem Unterteil mit Ramme und Sonde,

Fig. 2 eine vergrößert dargestellte Schnittansicht eines der Arbeitskammer des Druckluftzylinders vorgeschalteten Zeitventils der Vorrichtung gemäß Fig. 1,

Fig. 3 das Zeitventil in einer teilweise geschnittenen Seitenansicht gemäß Fig. 2, jedoch in entgegengesetzter Funktionsstellung,

Fig. 4 eine teilweise geschnittene Seitenansicht einer im Druckluftzylinder integrierten Pneumatikfeder der Vorrichtung gemäß Fig. 1,

Fig. 5 eine teilweise geschnittene Seitenansicht der erfindungsgemäßen Vorrictung, und

Fig. 6 eine Seitenansicht des Hauptbetätigungsventilblocks der Vorrichtung gemäß Fig. 1 in größerer Darstellung.

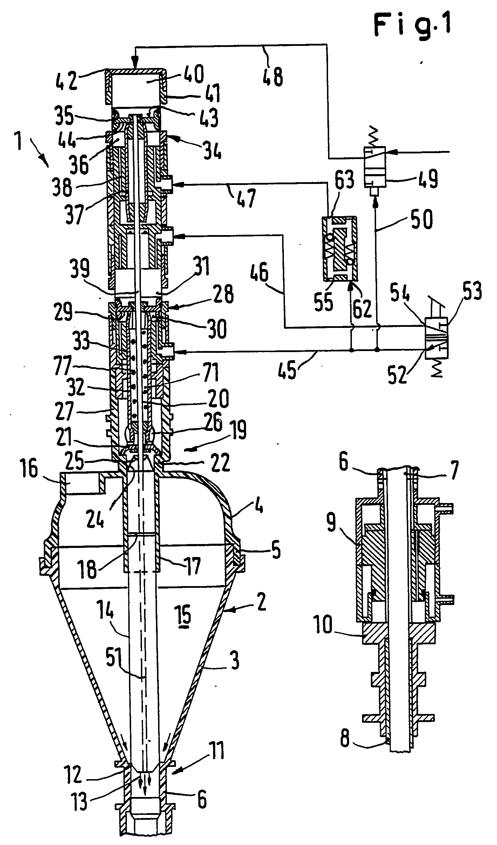

Die in der Fig. 1 dargestellte erfindungsgemäße Vorrichtung 1 ist zum Aufbrechen pflanzenbaulich genutzten Bodens vorgesehen, indem zum Beispiel von einem Kompressor erzeugte Druckluft in etwa 50—90 cm Tiefe schlagartig als Eruptionsstoß in den Boden eingebracht wird. Dadurch wird der Boden in definierten Bereichen aufgebrochen beziehungsweise aufgelockert und insbesondere in den strukturell vorgezeichneten Bruchlinien durchlässig gemacht, so daß die Bodenstruktur selbst nicht wie beim herkömmlichen Pflügen geschädigt wird. Die im Boden erzeugten feinen Kanäle können mit der erfindungsgemäßen Vorrichtung 1 unmittelbar nach dem Beginn des Druckstoßes mit Verbauungsstoffen abgestützt werden. Neben den Verbauungssubstraten können auch Düngemittel oder Heilmittel mit Hilfe der Druckluft in die Kanäle des Auflockerungsbereiches eingebracht werden, so daß durch den gleichzeitigen Sauerstoffeintrag eine optimale Aufbereitung des Bodens erzielt wird.

Die Vorrichtung 1 besitzt einen bevorzugt aus durchsichtigem Kunststoff oder aus Metall hergestellten trichterförmigen Zwischenbehälter 2, der aus einem Unterteil 3 und einem Oberteil 4 gebildet ist. Der Unterteil 3 und der Oberteil 4 sind über ein Gewinde 5 miteinander verschraubt. Am Unterteil 3 des Zwischenbehälters 2 ist ein Befestigungsstutzen 6 vorgesehen, in dem ein um seine Achse drehbares Innenrohr 7 eines in den aufzubrechenden Boden einbringbaren Sondenrohres 8 angeordnet ist.

Für das Einbringen des Sondenrohres 8 in den Boden weist die Vorrichtung 1 unter dem Befestigungsstutzen 6 eine hier druckluftbetriebene Ramme 9 und einen Amboß 10 auf.

In der Verjüngung des Unterteils 3 des Zwischenbehälters 2 ist ein Injektionsventil 11 ausgebildet, das aus einem Injektorventilsitz 12 des Unterteils 3 und aus einem düsenförmig konisch ausgebildeten Druckluftauslaß 13 eines Injektorrohres 14 besteht, das in der Längsmittenachse des Zwischenbehälters 2 dessen Innenraum 15 durchsetzt, in dem das in den Boden einzubringende Substrat gelagert ist.

Am Oberteil 4 des Zwischenbehälters 2 befindet sich ein Überdruckventil 16. Außerdem ist eine Rohrhülse 17 am Oberteil 4 angeordnet, die in den Innenraum 15 hineinragt und in der das Injektorrohr 14 axial verschiebbar gelagert und mittels einer Ringdichtung 18 abgedichtet ist.

Koaxial zur Längsmittenachse des Zwischenbehälters 2 ist aus dessen oberer Wandung ein Schnellschlußventil 19 angeordnet, das einen Ventilkegel 21 aufweist, der auf einem Ventilsitz 22 aufsitzt. Eine Hubstange 20 ist durch das Schnellschlußventil 19 hindurchgeführt. Das offene Oberende 24 des Injektorrohres 14 ist am unteren Ende der Hubstange 20 mit einer Schraubenmutter 25 befestigt. Mit der Schraubenmutter 25 kann eine Feineinstellung für eine exakte Dichtfunktion des Injektionsventils 11 erzielt werden.

Unmittelbar über dem Ventilkegel 21 ist in einer Gehäusewandung des Schnellschlußventils 19 eine Öffnung 26 des Anschlußstutzens für die vom Kompressor zugeführte Druckluft ausgebildet.

Auf das rohrförmige Ventilgehäuse 27 des Schnellschlußventils 19 ist ein pneumatischer Zylinder aufgeschraubt, der nachfolgend zum Zwecke der eindeutigen Begriffsbestimmung kurz als Pneumatikzylinder 28 bezeichnet wird, in dem ein Kolben 29 axial verschiebbar geführt ist. Unter dem Kolben 29 befindet sich eine Druckkammer 30, während über dem Kolben 29 eine Gegendruckkammer 31 sich befindet. Außerdem ist am Kolben 29 eine nach unten geführte, rohrförmig ausgebildete Kolbenstange 32 angeordnet. Die Kolbenstange 32 ist in einer Hülse 33 dicht geführt. Am unteren Ende der Kolbenstange 32 ist der Ventilkegel 21 des Schnellschlußventils 19 befestigt.

In Verlängerung der Längsmittenachse des Zwischenbehälters 2 ist oben auf den Pneumatikzylinders 28 ein weiterer pneumatischer beziehungsweise mit Druckluft betriebener Zylinder aufgeschraubt, der weitgehend wie der Pneumatikzylinder 28 ausgeführt ist und deshalb zur eindeutigen wörtlichen Unterscheidung zu diesem nachfolgend kurz als Druckluftzylinder 34 bezeichnet wird, in dem ein Hubkolben 35 axial verschiebbar geführt ist. Der Hubkolben 35 begrenzt nach unten hin ein Arbeitskammer 36 und besitzt ein nach unten gerichtetes Kolbenrohr 37.

Dieses Kolbenrohr 37 ist in einer Hülse 38 dicht gelagert und hat keine Hubfunktion, sondern lediglich Führungs- und Abdichtungsfunktion. Am oberen Ende des Kolbenrohres 37 ist die ebenfalls abgedichtet geführte Hubstange 20 befestigt.

Die Hubstange 20 weist eine in Längsrichtung als durchgehende Bohrung ausgeführte Luftleitung 39 auf, so daß ein freier Luftdurchgang durch den Hubkolben 35 hindurch bis in eine darüber befindliche Staudruckkammer 40 hinein besteht. Die Hubstange 20 ist am oberen Ende mit dem Kolbenrohr 37 verschraubt, das über ein hervorragendes Schraubende auch mit dem Hubkolben 35 verschraubt ist. Ofen ist das Gehäuse 41 des Druckluftzylinders 34 mit einer aufgeschraubten Verschlußkappe 42 verschlossen. Der Hubkolben 35 weist an seiner Oberseite eine in Richtung nach unten hin wirkende Staudruckfläche 43 auf und besitzt an seiner Unterseite eine in Richtung nach oben hin wirksame Arbeitsfläche 44, die um den Durchmesser des Kolbenrohres 37 kleiner ist als die Staudruckfläche 43.

Am Pneumatikzylinder 28 ist an der unteren Druckkammer 30 eine Steuerdruckleitung 45 und an der oberen Gegendruckkammer 31 eine weitere Steuerdruckleitung 46 angeschlossen. Außerdem ist am Druckluftzylinder 34 an der unteren Arbeitskammer 36 eine Steuerdruckleitung 47 und an der oberen Staudruckkammer 40 eine Druckluftleitung 48 vorgesehen, die über die Luftleitung 39 mit dem Druck im Innenrohr 7 korrespondiert.

In der zur oberen Staudruckkammer 40 führenden Druckluftleitung 48 befindet sich ein Pilotventil 49, das über eine weitere Steuerdruckleitung 50 betätigbar ist. Die Fig. 1 zeigt deutlich, daß die über das Pilotventil 49 ansteuerbare Druckluftleitung 48 oben an der Verschlußkappe 42 des Druckluftzylinders 34 so angeschlossen ist, daß sie koaxial zur Luftleitung 39 in die Staudruckkammer 40 einmündet und über die Luftleitung 39 direkt und offen mit dem Luftraum im Innenrohr 7 verbunden ist.

Außerdem ist in der Fig. 1 klar zu erkennen, daß die Luftleitung 39 als Druckfühlerleitung 51 in Richtung nach unten zum Innenrohr 7 hin verlängert ist, wobei die Luftleitung 39 auf kürzestem Wege vom Druckluftauslaß 13 des Injektorrohres 14 in axialer Richtung des Zwischenbehälter 2 durch die Druckfühlerleitung 51 und durch die hohle Hubstange 20 bis zur oberen Staudruckkammer 40 durchgehend mit in etwa gleichbleibendem Querschnitt ausgeführt ist. Konkret ist die Druckfühlerleitung 51 hier als Rohr ausgebildet, das in Verlängerung der Luftleitung 39 im Injektorrohr 14 angeordnet ist, so daß die von oben über die Druckluftleitung 48 in die Staudruckkammer 40 eingeleitete Druckluft durch die Druckfühlerleitung 51 getrennt von der durch das Schnellschlußventil 19 im Injektorrohr 14 nach unten geleiteten Druckluft bis zum Druckluftauslaß 13 am Injektorventilsitz 12 separat geführt wird. Eine verfeinerte Sensibilität der druckabhängigen Steuerfunktionen wird bereits auch dann erreicht, wenn die zusätzlich von oben durch die Druckluftleitung 48 in die Staudruckkammer 40 hereingeführte Druckluft durch die Luftleitung 39 beziehungsweise Druckfühlerleitung 51 bis an den oberen Bereich des Zwischenbehälters 2 geführt wird. Es ist jedoch besonders vorteilhaft, die Druckfühlerleitung 51 möglichst weit nach unten in Richtung zur Sonde 8 zu führen, wobei es auch günstig sein kann, die Druckfühlerleitung 51 bis in das Innenrohr 7 hineinzuleiten beziehungsweise hineinragen zu lassen.

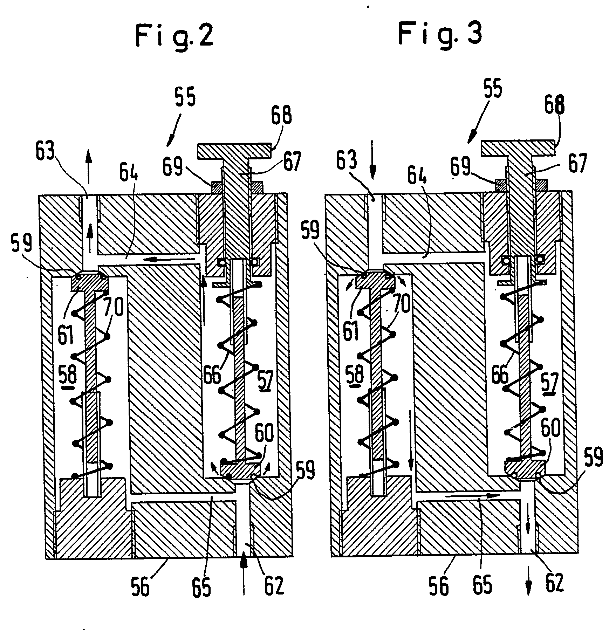

Die zur unteren Druckkammer 30 des Pneumatikzylinders 28 führende Steuerdruckleitung 45 ist an einem Ausgang 52 eines 5/2-Wegeventils 53 angeschlossen. Die zur unteren Arbeitskammer 36 des Druckluftzylinders 34 führende Steuerdruckleitung 47 und die zum Pilotventil 49 führende Steuerdruckleitung 50 zweigen von der zur unteren Druckkammer 30 führenden Steuerdruckleitung 45 ab und sind somit praktisch ebenfalls am Ausgang 52 des 5/2-Wegeventils 53 angeschlossen. An einem weiteren Abgang 54 des 5/2-Wegeventils 53 ist die zur oberen Gegendruckkammer 31 des Pneumatikzylinders 28 führende Steuerdruckleitung 46 angeschlossen. Das Ventil 53 hat somit fünf Anschlüsse und zwei Schaltpositionen. Wie der Fig. 1 zu entnehmen ist, befindet sich in der zur unteren Arbeitskammer 36 des Druckluftzylinders 34 führenden Steuerdruckleitung 47 ein Zeitventil 55, das genau einstellbar ist und zur individuellen Anpassung an unterschiedliche Bodenverhältnisse für einen zeitlich stets optimal abgestimmten Druckaufbau in der unteren Arbeitskammer 36 des Druckluftzylinders 34 sorgt. Das Zeitventil 55 besitzt, wie insbesondere den Fig. 2 und 3 zu entnehmen ist, dazu in einem Gehäuse 56 zwei parallele Kammern 57, 58, die an einer Stirnseite je einen Ventilsitz 59 aufweisen. In der Kammer 57 befindet sich ein Ventilkörper 60, während in der anderen Kammer 58 ein Ventilteil 61 gelagert ist.

Der Ventilkörper 60 und der Ventilteil 61 sind in etwa gleich ausgebildet und axial verschiebbar geführt, sie sind jedoch in entgegengesetzten Richtungen angeordnet. Der Ventilkörper 60 ist dem an Eingang 62 des Zeitventils 55 ausgebildeten Ventilsitz 59 zugeordnet, während der Ventilteil 61 dem am Ausgang 63 des Zeitventils 55 ausgebildeten Ventilsitz 59 zugeordnet ist. Zwischen dem Ausgang 63 und der Kammer 57 besteht für die Luftzuführung ein Verbindungskanal 64. Für die Luftrückströmung ist im Gehäuse 56 ein von der Kammer 58 zum Eingang 62 geführter Querkanal 65 ausgebildet.

Dem Ventilkörper 60 ist eine schraubenförmige Feder 66 zugeordnet, die den Ventilkörper 60 gegen den Ventilsitz 59 des Eingangs 62 drückt. Die Feder 66 ist an der dem Ventilsitz 59 gegenüberliegenden Seite an einer Einstellschraube 67 abgestützt, die einen Rändelkopf 68 besitzt und über diesen von Hand verdrehbar ist, so daß die Kraft der Feder 66 stufenlos fein eingestellt werden kann. Die Einstellschraube 67 ist mittels einer Kontermutter 69 arretierbar. Dem in der Kammer 58 befindlichen Ventilteil 61 ist ebenfalls ein schraubenförmiges Federelement 70 zugeordnet. Die kraft dieses Federelementes 70 ist nur so groß, daß der Ventilkörper die ihm zugedachte Rückschlagfunktion übernehmen kann und bei der Entlastung der Arbeitskammer 36 des Druckluftzylinders 34 keine Verzögerung aufkommen und nur einen möglichst geringen Restdruck entstehen läßt. Die Kraft der Feder 66 kann zweckmäßig so eingestellt werden, daß der Ventilkörper 60 zum Beispiel in einem Bereich zwischen 0,5 bis 8 bar vom Ventilsitz 59 des Eingangs 62 abhebt, so daß die am Ausgang 63 aus dem Zeitventil 55 ausströmende Luftzuführung zum Öffnen des Injektionsventils 11 hinsichtlich des Druckes und der Geschwindigkeit genau bestimmt werden kann. Das Zeitventil 55 erlaubt somit eine Beeinflussung des Zeitpunktes bezüglich des Druckaufbaues in der Arbeitskammer 36 sowie der Druckhöhe. Das Aufbruchverfahren kann auf die in der Praxis vorkommenden unterschiedlichen Bodenverhältnisse deshalb genau eingestellt werden, so daß stets eine hohe Leistungsfähigkeit bei der Verfahrensdurchführung gewährleistet ist. Bei der in der Fig. 3 dargestellten Funktionsstellung strömt die Druckluft zurück und kann sich nahezu vollkommen entspannen, das heißt das Injektionsventil 11 schließt. Die Druckluft entweicht dabei über das 5/2-Wegeventil 53.

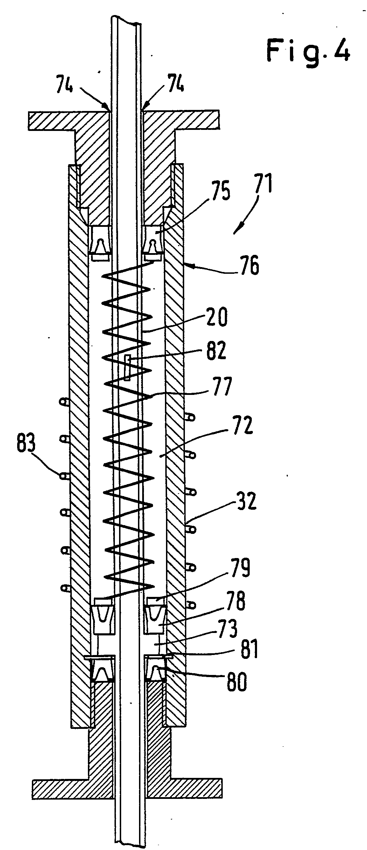

Der Fig. 1 ist zudem zu entnehmen, daß für ein einwandfreies Verschließen über dem Schnellschlußventil 19 eine Pneumatikfeder 71 vorgesehen ist, die in der Fig. 4 vergrößert dargestellt ist. Die Pneumatikfeder 71 wird über die an der Gegendruckkammer 31 angeschlossene Steuerdruckleitung 46 mit Druckluft versorgt. Dazu ist in der Kolbenstange 32 ein Druckraum 72 ausgebildet, der von der hohlen Hubstange 20 durchsetzt ist. An der Hubstange 20 befindet sich ein Kolben 73. An der der Gegendruckkammer 31 des Pneumatikzylinders 28 zugewandten oberen Seite der Pneumatikfeder 71 befindet sich eine Lufteinströmung 74 mit einem rückschlagventilartig wirkenden Dichtring 75. Diese im Druckraum 72 des Kolbenrohres 32 befindliche Dichtring 75 besitzt einen in etwa V-förmigen Querschnitt mit zwei nach unten auseinanderstrebenden Dichtlippen, welche innen die Hubstange 20 und außen den Druckraum 72 abdichten. An der nach unten weisenden V-Öffnung des als im wesentlichen normaler Nutring ausgebildeten Dichtringes 75 befindet sich eine Stütz- und Führungsscheibe 76, an der das eine Ende einer schraubenförmigen Haltefeder 77 anliegt. Der Kolben 73 der Pneumatikfeder 71 weist ebenfalls einen im Querschnitt V-förmigen Dichtring 78 auf, der in umgekehrter Lage angeordnet ist, so daß die V-Öffnung der auseinanderstrebenden Dichtlippen nach oben weist. Auch hier ist eine Stützscheibe 79 für das untere Ende der Haltefeder 77 angeordnet. An der dem Schnellschlußventil 19 zugewandten Unterseite des Druckraumes 72 der Pneumatikfeder 71 befindet sich außerdem eine Ringdichtung 80, die im Querschnitt wie die Dichtringe 75 und 78 ausgebildet ist und zwei V-förmig auseinanderstrebende Dichtlippen aufweist, wobei die V-Öffnung nach unten weist. Die Ringdichtung 80 liegt an einer am Kolbenrohr 32 festgelegten Abstützscheibe 81 an.

Die in axialer Richtung hohle Hubstange 20 besitzt einen axialen Entlastungskanal 82, der so angeordnet ist, daß bei geöffnetem Injektionsventil 11 durch Axialverschiebung der Hubstange 20 nach oben der Entlastungskanal 82 die Dichtlippe des Dichtringes 75 überbrückt, so daß der Druck über den Kanal 74, die Gegendruckkammer 31, die Steuerdruckleitung 46 und das 5/2-Wegeventil 53 entweicht. Weiterhin ist außen an der Kolbenstange 32 der Pneumatikfeder 71 eine zusätzliche Schließfeder 83 für das Schnellschlußventil 19 vorgesehen.

Die Haltefeder 77 der Pneumatikfeder 71 ist in ihrer Kraft so bemessen, daß sie den oberen Dichtring 75 zurückhalten kann, während die Druckluft von oben einströmt. Die Verschlußkraft des Nutringes in Richtung von oben nach unten ist sehr klein, so daß die Luft schon etwa bei 0,2 bar durch die Lufteinströmung 74 in den Druckraum 72 gelangen kann. Der Dichtring 75 besitzt die Funktion eines Rückschlagventils. Die äußere Schließfeder 83 sorgt für einen sicheren Verschluß zu Beginn der Druckluftansammlung vor dem Schnellschlußventil 19.

Bei in den Boden eingeschlagener Sonde wird zunächst das Sondenrohr 8 geöffnet. Dabei gibt das nicht dargestellte Bedienungsventil der Druckluft den Weg über das 5/2-Wegeventil 53 frei für das zusätzliche pneumatische Verschließen des Schnellschlußventils 19 und des Injektionsventils 11. Die Druckluft dringt durch die Lufteinströmung 74 durch den oberen Dichtring 75 in die Druckkammer 72 ein. Der Druck auf den Kolben 73 bewirkt zum Beispiel bei 20 bar eine derartig hohe Schließkraft, wie sie sonst mit einer mechanischen Feder insbesondere auf Grund der engen Raumverhältnisse und somit beengten Dimensionierung nicht erreicht werden kann. Die Druckluft stützt sich am Zylinderboden ab. Im Augenblick des Bodenaufbruchs fällt der Druck in der Staudruckkamer 40 ab. Der über das Zeitventil 55 in der Arbeitskammer 36 aufgebaute Druck drückt nun das Injektionsventil 11 auf. Dabei überbrückt der Entlastungskanal 82 der Hubstange 20 den oberen Dichtring 75. Die Druckluftfederkraft sinkt somit auf 0 ab, so daß nur noch die geringe Kraft der Haltefeder 77 besteht. Dadurch ist die äußere Schließfeder 83 imstande, das Schnellschlußventil 19 zu schließen.

Da das Pilotventil 49 seinen Steuerimpuls aus der Steuerdruckleitung 50 erhält, wird es gleichzeitig mit dem Schnellschlußventil 19 geöffnet. Die Luft strömt somit durch die Druckluftleitung 40 parallel und gleichzeitig mit der Druckluft, die durch das Schnellschlußventil 19 strömt, so daß die Luft zur selben Zeit durch die Druckfühlerleitung 51 nach unten gelangt. Der beim Auftreffen der Druckluft auf den umgebenden Boden entstehende Staudruck bremst die durch die Druckfühlerleitung 51 strömende Luft schon beim Austritt aus dem Druckluftauslaß 13 ab. Die Staudruckkammer 40 wird dadurch ausgesprochen schnell mit dem nötigen Staudruck versorgt, so daß der Verschluß des Injektionsventils 11 sehr feinfühlig und schnell erfolgen kann. Durch die vom Pilotventil 49 kommende und durch die Druckfühlerleitung 51 von oben nach unten strömende Druckluft wird eine Erhöhung der Steuerkraft und eine absolut störungsfreie Ventlfunktion erzielt, da durch die Luftströmung selbst bei staubförmigen Substraten keinerlei Verschmutzung beziehungsweise Verstopfungsgefahr in der Druckfühlerleitung 51 und in der Luftleitung 39 auftreten kann.

Der zweite obere Kolbenzylinder betätigt somit das Injektionsventil 11 vollkommen unabhängig von der Betätigung des Schnellschlußventils 19. Die Druckfühlerleitung 51 verbindet das Innenrohr 7 des Sondenrohres 8 mit der oberen Staudruckkammer 40 des oberen Kolbenzylinders und besorgt damit verfahrensdruckgesteuert den zuverlässigen Verschluß und auch die optimale Öffnung des Injektionsventiles 11 bei allen Bodenarten und Bodenzuständen.

Bei dem erfindungsgemäßen Verfahren mit der erfindungsgemäßen Vorrichtung 1 wird der besondere Vorteil erreicht, daß der pflanzenbaulich zu nutzende Boden besser und wirkungsvoller als mit herkömmlichen Pflügen oder dergleichen gelockert werden kann. Dabei ist ein wesentlich kleinerer Energieeinsatz als beim Pflügen erforderlich. Ein wesentlicher Vorteil besteht außerdem darin, daß mit der erfindungsgemäßen Vorrichtung 1 eine optimale Verbauung der Erdspalten und Bodenrisse durch die unmittelbar nachfolgende Substrateinbringung erzielt wird. Insbesondere nach mehrmaliger Anwendung wird dabei ein dichtes Versorgungsadernetz erreicht, das die Möglichkeit schafft, bei einer späteren Bearbeitung oftmals nur eine flachgründige Saatbeetbereitung durchzuführen, so daß insgesamt ein äußerst wirtschaftliches und ein die Ökologie förderndes Bearbeitungsverfahren gegeben ist.

Ein weiterer Vorteil des Verfahrens besteht darin, daß mit seiner Hilfe verdichtete oder sonst kranke Böden bei aufstehender Kultur, zum Beispiel Obst- und Weinanbau, Forstwirtschaft, Straßenbäumen, geheilt und gelockert sowie durchlässig gemacht werden können.

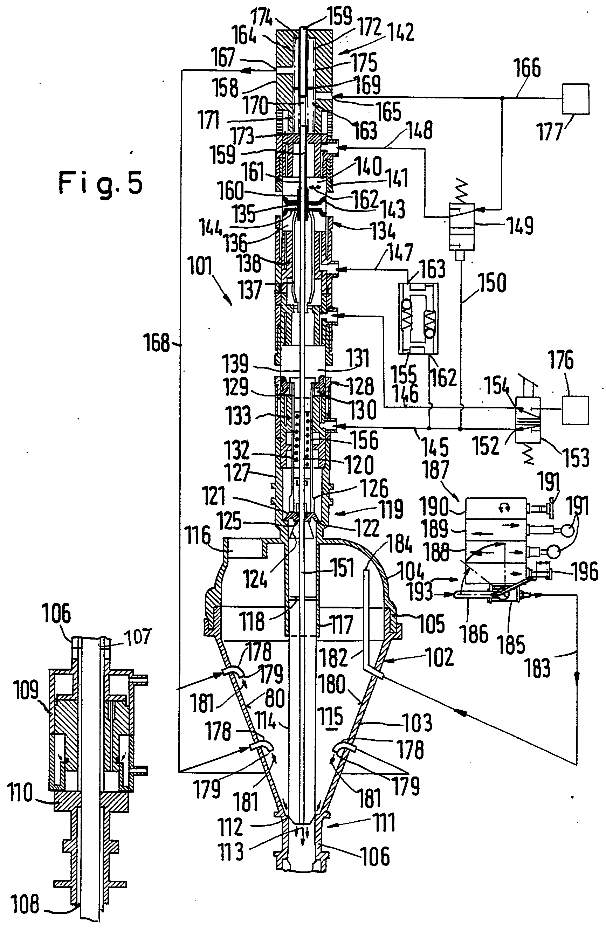

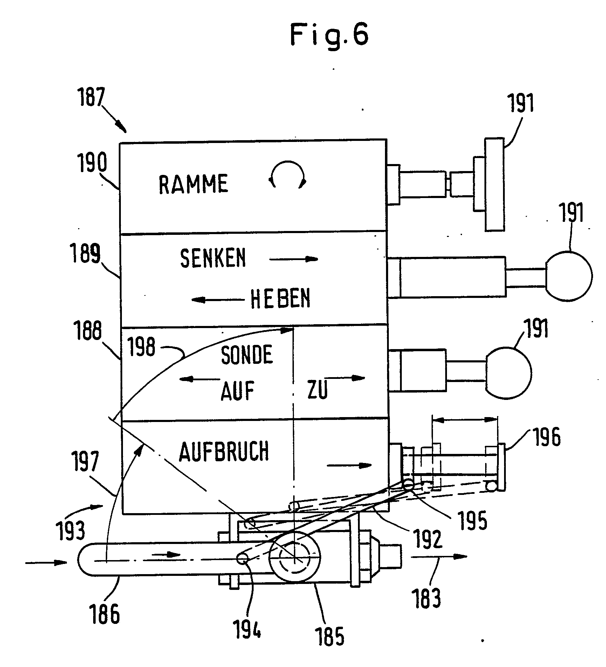

Die in Fig. 5 und 6 dargestellte, weiter verbesserte Vorrichtung 101 entspricht in ihrem Grundaufbau der Vorrichtung 1 nach den Fig. 1 bis 4. Die mit dem Bezugszeichen 102 bis 141 und 143 bis 155 versehenen Teile der Vorrichtung 101 entsprechend den mit den Bezugszeichen 2 bis 41 und 43 bis 55 versehenen Teilen der zuvor ausführlich beschriebenen Vorrichtung 1, so daß auf eine Wiederholung der Beschreibungsteile an dieser Stelle verzichtet werden kann. Anstelle der Verschlußkappe 42 ist bei der Vorrichtung 101 jedoch ein Kolbenschieberventils 142 vorgesehen und die Pneumatikfeder (bisher 71) besitzt bei der Vorrichtung 101 das Bezugszeichen 156.

Das obere Kolbenschieberventil 142 besitzt in einem Gehäuse 158 eine Kolbenstange 159, die in Richtung der vertikalen Längsmittenachse axial verschiebbar ist und mit der Hubstange 120 verbunden ist. Dafür ist eine Gewindemutter 160 vorgesehen, die auf einen in die Staudruckkammer 140 hineinragenden Rohrteil 161 der hohlen Hubstange 120 aufgeschraubt ist. Damit ein freier Luftdurchgang von der Staudruckkammer 140 in die hohle Hubstange 120 hinein besteht, ist eine Querbohrung 162 vorgesehen, die sowohl im Rohrteil 161 als auch in der Gewindemutter 160 ausgebildet ist.

Im Gehäuse 158 des Kolbenschieberventils 142 sind koaxial übereinander eine Eingangskammer 163 und eine Ausgangskammer 164 ausgebildet. Die Eingangskammer 163 besitzt einen Lufteinlaß 165 für die Zuluft 166 und die Ausgangskammer 164 besitzt einen Luftauslaß 167, an dem eine Druckleitung 168 angeschlossen ist. Etwa in der Mitte des Gehäuses 158 befindet sich eine Dichtung 169, welche die Eingangskammer 163 und die Ausgangskammer 164 voneinander trennt. Die Kolbenstange 159 durchsetzt die Dichtung 169 und ist von dieser dicht umschlossen. Die Kolbenstange 159 weist in ihrem Längsmittenbereich einen Verjüngungsteil 170 auf, dessen Querschnitt kleiner ist als der Querschnitt der nach oben und unten abstrebenden übrigen Kolbenstangenteile. In der dargestellten Verschlußposition des Kolbenschieberventils 142 befindet sich der obere Teil der Kolbenstange 159 im Bereich der Dichtung 159, so daß die Eingangskammer 163 und die Ausgangskammer 164 dicht voneinander getrennt sind. Der Verjüngungsteil 170 befindet sich dabei ausschließlich im Bereich der Eingangskammer 163. In der Öffnungsposition des Kolbenschieberventils 142 ist die Kolbenstange 159 über den Hubkolben 135 so weit nach oben geschoben worden daß sich der Verjüngungsteil 170 im Bereich der Dichtung 169 und sowohl in der Eingangskammer 163 als auch in der Ausgangskammer 164 befindet. Dadurch ist ein freier Luftdurchgang vom Lufteinlaß 165 durch das Kolbenschieberventil 142 hindurch zum Luftauslaß 167 hin gegeben.

Im Kolbenschieberventil 142 sind zwei koaxial übereinander angeordnete Abstandshülsen 171, 172 vorgesehen. Die untere Abstandshülse 171 befindet sich in der Eingangskammer 163 während die obere Abstandshülse 172 in der darüber liegenden Ausgangskammer 164 positioniert ist.

Zwischen den beiden Abstandshülsen 171, 172 ist die etwa in der Mitte des Gehäuses 158 angeordnete Dichtung 169 abgestützt. An den einander gegenüberliegenden Stirnseiten der Abstandshülsen 171, 172 also im unteren Endbereich der Eingangskammer 163 und im oberen Endbereich der Ausgangskammer 164 sind weitere Dichtungen 173, 174 angeordnet, die bevorzugt genau so gestaltet sind wie die mittlere Dichtung 169 und die Kolbenstange 159 ebenfalls dicht umschließen. Um auch bei sehr hohem Luftdruck von z.B. 120 bar eine hohe Dichtigkeit zu gewährleisten, sind die Dichtungen 169, 173, 174 des Kolbenschieberventils 142 als sogenannte Nutringdichtungen ausgebildet, die einen in etwa V-förmigen Querschnitt aufweisen. Die Dichtungen 169, 173, 174 sind dabei so positioniert, daß die Öffnungsseite des V-Profils jeweils nach der Seite hin gerichtet ist, an der der hohe Luftdruck ansteht, so daß die V-förmig abstrebenden lippen der Dichtungen 169, 173, 174 mit zunehmendem Druck verstärkt gegen die angrenzenden Dichtflächen gepreßt werden, wodurch stets ein einwandfreie Dichtfunktion gewährleistet ist.

Damit die Druckluft vom Lufteinlaß 165 überhaupt zum Luftauslaß 167 gelangen kann, sind in den beiden Abstandshülsen 171, 172 in denen die Kolbenstange 159 axial geführt ist, radiale Luftdurchlaßöffnungen 175 ausgebildet. Zur Erzielung einer einwandfreien Funktion und eines optimalen Verfahrensablaufs kann es günstig sein, die zum Kolbenschieberventil 142 führende Zuluft 166 vom übrigen verfahrenstechnischen Luftdruck der Vorrichtung getrennt heranzuführen. Die Zuluft 166 wird somit unabhängig von der zur Öffnung 114 herangeführten Druckluft von einem Druckluftbehälter 177 abgenommen.

Am Zwischenbehälter 102 sind Luftdüsen 178 angeordnet, die alle an der vom Kolbenschieberventil 142 herangeführten Druckleitung 168 angeschlossen sind. Die Luftdüsen 178 sind am Unterteil 103 angeordnet und ragen in den Innenraum 115 hinein. Die Luftdüsen 178 sind für eine optimale Beschleunigung des Substrates in zwei verschiedenen Ebenen übereinander angeordnet, wobei die dem Injektionsventil 111 nächstliegenden Luftdüsen 178 der unteren Ebene etwa im unteren Viertel des Zwischenbehälters 102 angeordnet sind. Die Luftdüsen 178 der oberen Ebene befinden sich etwa im Mittenbereich des Zwischenbehälters 102. Es hat sich gezeigt, daß es besonders günstig sein kann, insgesamt sieben oder acht Luftdüsen 178 am Zwischenbehälter 102 anzuordnen, wobei wie beim vorliegenden Ausführungsbeispiel in der unteren Ebene vier Luftdüsen 178 und in der oberen Ebene drei oder vier Luftdüsen 178 vorgesehen sind. In der Zeichnung sind allerdings nur die auf der linken Seite und die auf der rechten Seite angeordneten Luftdüsen 178 ersichtlich, während die hinteren Luftdüsen 178 durch das Injektorrohr 114 verdeckt und die vorderen Luftdüsen aufgrund der Schnittdarstellung nicht ersichtlich sind. Die Luftdüsen 178 sind am Umfang des Zwischenbehälters 102 bevorzugt in etwa gleichen Abständen zueinander angeordnet. Es kann darüber hinaus für bestimmte Anwendungen auch zweckmäßig sein, mehr oder weniger als acht Luftdüsen 178 am Zwischenbehälter 102 vorzusehen, wobei es zudem günstig sein kann, die Luftdüsen 178 in mehr als einer bzw. zwei Ebenen übereinander anzuordnen. Dabei ist es möglich, die Luftdüsen 178 der einen Ebene so versetzt zur anderen Ebene anzuordnen, daß die Luftdüsen 178 der oberen Ebene in die zwischen den Luftdüsen 178 der unteren Ebene bestehenden Lücken hineinblasen.

Wie der Zeichnung zu entnehmen ist, sind die Luftdüsen 178 etwa rechtwinklig gebogen ausgeführt und so angeordnet, daß der Ausgang 179 sich in der Nähe der Innenfläche 180 des Zwischenbehälters 102 befindet. Dabei sind die Luftdüsen 178 mit ihrem Ausgang 179 so ausgerichtet, daß der aus dem Ausgang 179 austretende Druckluftstrom 181, parallel zur Innenfläche 180 in Richtung zum Druckluftauslaß 113 bläst. Der Druckluftstrom 181 bewirkt bevorzugt durch seinen vom eigentlichen Verfahren weniger beeinflußten, nahezu unabhängigen hohen Luftdruck in den Düsen 178 eine hohe Luftgeschwindigkeit, die imstande ist, die Substratteilchen, auch wenn sie ein hohes spezifisches Gewicht besitzen, in erforderlicher Weise zu beschleunigen, so daß das im Behälter 102 befindliche Substrat bei geöffnetem Injektionsventil 111 in jeder wünschenswerten Menge in den Luftstrom 113 eingeschossen und in diesem mitgerissen, gegebenenfalls zuverlässig weiter beschleunigt und in das Bodenvolumen eingetragen und bestmöglich verteilt wird.

Im Augenblick des Bodenaufbruchs fällt der Druck im gesamten Verfahrensweg ab. Der dabei in der Staudruckkammer 140 abrupt abfallende Druck bewirkt das Öffnen des Injektionsventils 111. Im Augenblick des Öffnens des Injektionsventils 111 wird auch das Kolbenschieberventil 142 aufgrund der zwangsläufig nach oben geschobenen Kolbenstange 159 geöffnet, so daß die Zuluft 166 in die Druckleitung 168 und zu den Luftdüsen 178 gelangt. Der aus den Luftdüsen 178 heraustretende Druckluftstrom 181 reißt das im Behälter 102 befindliche Substrat mit hoher Geschwindigkeit mit und wirkt dem beim Öffnen des Injektionsventils 111 zunächst auftretenden Gegendruck entgegen. Im Zwischenbehälter 102 bildet sich durch diesen Druckluftstrom 181 ein solches Druckniveau, das das Substrat dazu zwingt, sofort beim Öffnen des Injektionsventils 111 aus dem Zwischenbehälters 102 nach unten hin auszuströmen. Die Substratpartikel werden von den acht Luftdüsen 178 somit in den Injektionsstrahl beschleunigt hineingeschleudert, so daß der Injektionsstrahl die Substratpartikel gerade in der leistungsfähigsten Anfangsphase des Substrateintrags mit hohem Druck und großer Geschwindigkeit in die entferntesten und schmalsten Spalten und Risse des kurz zuvor aufgebrochenen Bodens transportiert. Dadurch wird die Durchdringung des Bodenvolumens wesentlich verbessert und es können bei gleichem oder geringerem Energieeinsatz bzw. weniger Druckluftverbrauch mehr Verbauungssubstrate, Dünger oder Heilstoffe in den Boden eingetragen und optimal verteilt werden. Diese Verbesserungen sind ganz besonders wichtig für die Sanierung in allen umweltgeschädigten Baumbeständen, z.B. in öffentlichen Parkanlagen, im Straßenbegleitgrün und in Wäldern.

Nach einem weiteren erfinderischen Lösungsvorschlag kann es für eine optimale Durchdringung und Verbauung des aufgebrochenen Bodenvolumens mit bevorzugt hohem Luftdruck und besonders hoher Luftgeschwindigkeit außerdem günstig sein, einen Lufteinlaß 182 vorzusehen, der in den Innenraum 115 des Zwischenbehälters 102 einmündet und an einer Überdruckleitung 182 angeschlossen ist. Der Lufteinlaß 182 ist zur Erzeugung eines Überdrucks vorgesehen, der vor dem Öffnen des Injektionsventils 111 und somit auch vor dem Öffnen des Schnellschlußventils 119 für den in den Boden einzubringenden Druckluftstoß im Zwischenbehälter 102 aufgebaut wird und das Substrat im Zwischenbehälter 102 in Richtung zum Druckluftauslaß 113 hin beaufschlagt. Wie der Zeichnung zu entnehmen ist, durchsetzt der Lufteinlaß 182 die Wand des Zwischenbehälters 102 etwa in dessen Mittenbereich und erstreckt sich als umgebogenes Rohr in Richtung nach oben zur Deckwand des Oberteils 104, so daß der Luftaustritt 184 auch bei gefülltem Zwischenbehälter 102 sich über dem Substrat befindet. Der Überdruck im Zwischenbehälter 102 kann mit dem Druckluftstrom 181 der Luftdüsen 178 zusammenwirken und somit das Substrat verstärkt zum Druckluftauslaß 113 hin befördern oder auch allein ohne den Druckluftstrom 181 der Luftdüsen 178 aufgebaut und verfahrensmäßig für einen beschleunigten Substrataustritt angewandt werden.

Der durch den Lufteinlaß 182 im Zwischenbehälter 102 vor dem Aufbrechen des Bodens erzeugte Überdruck ist mindestens so hoch, daß dem beim Öffnen des Injektionsventils 111 in Richtung zum Innenraum 115 des Zwischenbehälters 102 wirkenden Gegendrucks aus dem Innenrohr 107 ein solcher Druckentgegensteht, daß mindestens ein Druckausgleich gegeben ist. Der Gegendruck aus dem Innenrohr 107 kann somit nicht in den Innenraum 115 gelangen. Das Substrat wird vielmehr aufgrund des Überdrucks sofort in den Druckluftstrom 113 hineingedrückt. Die Beaufschlagung des Substrats mit dem Überdruck erfolgt zweckmäßig kurz vor dem Öffnen des Injektionsventils 111. Die stoßartige Einbringung der Druckluft in den Boden wird unmittelbar nach dem Erreichen des Überdrucks ausgelöst.

Der durch die Überdruckleitung 183 herangeführte Luftdruck sollte zumindest dem Strahldruck entsprechen, der beim Öffnen des Injektionsrohres 114 entsteht. Dieser beträgt erfahrungsgemäß zwischen zwei und drei bar. Er kann jedoch in besonderen Fällen auch wesentlichen höher liegen.

Die Druckluft für den Aufbau des Überdrucks im Zwischenbehälter 102 wird durch ein in der Überdruckleitung 183 befindliches Kugelventil 185 gesteuert, das, wie auch der Fig. 6 zu entnehmen ist, einen Bedienungshebel 186 für eine Handbetätigung aufweist. Das Kugelventil 185 ist an einem kompakten Ventilblock 187 angeordnet, der das dem Aufbruch des Bodens dienende Wegeventil 153 darüber ein dem Öffnen und Schließen des Sondenrohres 108 dienendes Ventil 188, darüber ein zum Heben und Senken des Sondengerätes mit Hilfe von z.B. zwei Hubzylindern vorgesehenes Ventil 189 und darüber noch ein zur Betätigung der Ramme 109 vorgesehenes Ventil 190 aufweist. Die Ventile 188, 189 und 190 besitzen für die Betätigung entsprechende Griffe 191.

Das Wegeventil 153 ist mit dem Kugelventil 185 über ein Gestänge 192 so gekoppelt, daß ein Folgeventil 193 gegeben ist. Das Gestänge 192 ist dazu mit seinem einen Ende 194 am Bedienungshebel 186 und mit seinem anderen Ende 195 an einem Öffner 196 des 5/2-Wegeventils 153 angeordnet.

Wird der Bedienungshebel 186 in Pfeilrichtung entsprechend einem ersten Öffnungsweg 197 annähernd um 45 Grad hochgeschwenkt, wird das Kugelventil 185 so weit geöffnet, daß Druckluft durch die Überdruckleitung 183 und den Lufteinlaß 182 in den Innenraum 115 des Zwischenbehälters 102 einströmt, bis der erforderliche Überdruck im Innenraum 115 aufgebaut ist. Bei diesem ersten Öffnungsweg 197 wird der bevorzugt als Kolbenschieber ausgeführte Öffner 196 des 5/2-Wegeventils 153 noch nicht bewegt, sondern verbleibt in seiner Verschlußstellung. Wird nun der Bedienungshebel 186 in einem zweiten Öffnungsweg 198 in Pfeilrichtung etwa bis zur Senkrechten weiter nach oben geschwenkt, wird das Kugelventil 185 weiter geöffnet und gleichzeitig wird über das Gestänge 192 der Öffner 196 in der Zeichnung nach rechts verschoben, so daß das Wegeventil 153 jetzt ebenfalls geöffnet wird, so daß der Druckstoß zum Aufbrechen des Bodens eingeleitet wird. Nach dem erfolgten Eintrag der Substrate in den aufgebrochenen Boden wird der Bedienungshebel 186 in die dargestellte Ausgangsstellung zurückgeschwenkt, so daß das Kugelventil 185 abgesperrt ist. Dabei kann der Öffner 196 über das Gestänge 192 zum Schließen des Wegeventils 153 ebenfalls nach links zwangsgeführt mitgenommen oder bei einer anderen bevorzugten Ausführung z.B. durch die Kraft einer Feder nach links in die Verschlußstellung gedrückt werden. Die Zuluft für das Kugelventil 185 kann aus einem gesonderten Druckluftbehälter herangeführt und über Druckminderer optimiert werden.

Aufgrund des vor dem Öffnen des Injektionsventils 111 im Zwischenbehälter 102 augebauten Überdrucks kann der vom Luftstrahl 113 ausgehende Gegendruck keine vom Luftstrahl 113 ausgehende Gegendruck keine Wirkung in Richtung zum Innenraum 115 hin entfalten, so daß keine Luftbewegung vom Luftstrahl in den Zwischenbehälter 102 hinein erfolgen kann. Dadurch kann das Substrat, insbesondere auch spezielle schwere Substrate, ohne Verzögerung direkt nach dem Aufbruch des Bodens in den Luftstrahl 113 eingemischt und in den Boden eingebracht werden.

## Patentansprüche

1. Vorrichtung zum Aufbrechen pflanzenbaulich genutzten Bodens mit einer ein Innenrohr (7, 107) aufweisenden Sonde die in den Boden einbringbar ist, eine mit dem Kolben (29, 129) eines pneumatischen Zylinders (28, 128) gekoppelten Druckluft-Schnellschlußventiles (19, 119) im oberen Bereich, welches die vom Kompressor zum Aufbrechen des Bodens zugeführte Druckluft steuert, und einem Injektionsventil (11, 111) im unteren Bereich eines mit dem Innenrohr (7) der Sonde in Verbindung stehenden Substrat-Zwischenbehälters (2, 103), einem vom Schnellschlußventil (19, 119) zum Injektionsventil (11, 111) geführten Injektorrohr (14, 114), das über eine hohle Hubstange (20, 39, 51; 120, 139, 151) mit dem Kolben (35, 135) eines zweiten druckluftbetriebenen Zylinders (34, 134) verbunden ist und für eine zeitlich verzögerte Freigabe des Injektionsventiles (11, 111) luftleitend mit einer Staudruckkammer (40, 140) dieses zweiten Zylinders (34, 134) in Verbindung steht, und mit an beiden Zylindern (28, 34; 128, 134) angeschlossenen Steuerdruckleitungen (45, 46, 47; 145, 146, 147), dadurch gekennzeichnet, daß an der Staudruckkammer (40, 140) des zweiten Druckluftzylinders (34, 134) eine Druckluftleitung (48, 148) mit einem Pilotventil (49, 149) angeschlossen ist, das über eine weitere Steuerdruckleitung (50, 150) betätigbar ist, durch welche das Pilotventil (49, 149) seinen Steuerimpuls zum Öffnen der Druckleitung (48, 148) gleichzeitig mit dem Öffnen des Druckluft-Schnellschlußventiles (19, 119) erhält.

2. Vorrichtung nach Anspruch 1, dadurch gekennzeichnet, daß die Steuerdruckleitungs (50, 150) des Pilotventils (49, 149) mit der zur Druckkammer (30, 130) des Pneumatikzylinders (28, 128) führenden Steuerdruckleitung (45, 145) und der Steuerdruckleitung (47, 147) der Arbeitskammer (36, 136) des Druckluftzylinders (34, 134) gemeinsam an einem Ausgang (52, 152) eines 5/2-Wegeventils (53, 153) angeschlossen ist, an dem an einem weiteren Abgang (54, 154) auch die Steuerdruckleitung (46, 146) der Gegendruckkammer (31, 131) des Pneumatikzylinders (28, 128) angeordnet ist.

3. Vorrichtung nach einem der Ansprüche 1 oder 2, dadurch gekennzeichnet, daß der Staudruckkammer (40, 140) les Druckluftzylinders (34, 134) eine in Richtung zum Sondenrohr (8, 108) mindestens bis in den Bereich des Zwischenbehälters (2, 102) geführte Druckfühlerleitung (51, 151) zugeordnet ist.

4. Vorrichtung nach einem der Ansprüche 1 bis 3, dadurch gekennzeichnet, daß die Druckfühlerleitung (51, 151) als Verlängerung der mit der Staudruckkammer (40, 140) des Druckluftzylinders (34, 134) in Verbindung stehenden Luftleitung (39, 139) ausgeführt ist, und zwar vorzugsweise derart, daß sie in Verlängerung der Luftleitung (39, 139) im Injektorrohr (14, 114) angeordnet und in Verlängerung der Luftleitung (39, 139) im Injektorrohr (14, 114) bis zu dessen Druckluftauslaß (13, 113) am Injektorventilsitz (12, 112) des Injektionsventils (11, 111) geführt ist.

5. Vorrichtung nach einem der Ansprüche 1 bis 4, dadurch gekennzeichnet, daß für einen zeitlich optimal abstimmbaren Druckaufbau in der Arbeitskammer (36, 136) in der zu dieser führenden Steuerdruckleitung (47, 147)/ein Zeitventil (55, 155) angeordnet ist, das einen mit einstellbarer Federkraft belasteten Ventilkörper (60) für die Luftzuführung und zum Entweichen der rückströmenden Luft einen mit geringer Federkraft beaufschlagten Ventilteil (61) aufweist.

6. Vorrichtung nach einem der Ansprüche 1 bis 5, dadurch gekennzeichnet, daß einer in einer zum Ventilkegel (21, 121) des Schnellschlußventils (19, 119) führenden Kolbenstange (32, 132) gelagerten Haltefeder (77) eine Pneumatikfeder (71, 156) zugeordnet ist, die an der zur Gegendruckkammer (31, 131) des Pneumatikzylinders (28, 128) führenden Steuerdruckleitung (46, 146) angeschlossen ist und in einem Druckraum (72) der Kolbenstange (32) an einer als Luftleitung ausgeführten Hubstange (20, 120) einen Kolben (73) und an einer mit der Gegendruckkammer (31, 131) verbundenen Lufteinströmung (74) einen rückschlagventilartigen Dichtring (75) aufweist, vorzugsweise derart, daß der Dichtring (75) im Druckraum (72) der Kolbenstange (32, 132) an der Lufteinströmung (74) einen in etwa V-förmigen Querschnitt aufweist, die Hubstange (20, 120) umschließt und an der V-Öffnung eine Stützscheibe (76) für die Haltefeder (77) aufweist, und daß dem Kolben (73) im Druckraum (72) ebenfalls ein im Querschnitt V-förmiger Dichtring (78) in umgekehrter Lage und eine Stützscheibe (79) für das andere Ende der Haltefeder (77) zugeordnet ist.

7. Vorrichtung, insbesondere nach einem der Ansprüche 1 bis 6, dadurch gekennzeichnet, daß in den Innenraum (115) des Zwischenbehälters (102) zur Einbringung eines zusätzlichen Druckluftstromes (181) für einen bei geöffnetem Injektionsventil (111) beschleunigten Austritt des Substrates mindestens eine, vorzugsweise zwei oder mehrere an einer Druckleitung (168) angeschlossene Luftdüsen (178) einmünden (Fig. 5).

8. Vorrichtung nach Anspruch 7, dadurch gekennzeichnet, daß der Ausgang (179) der Luftdüse (178) für den Druckluftstrom (181) dem frei im Behälter strömenden Druckluftstrahl zugewendet ist, vorzugsweise derart, daß der Ausgang (179) der Luftdüse (178) in der Nähe der Innenfläche (180) des Zwischenbehälters (102) so angeordnet ist, daß der zum Injektionsventil (111) gerichtete Druckluftstrom (181) in etwa parallel zur Innenfläche (180) ausgerichtet ist.

9. Vorrichtung nach einem der Ansprüche 7 oder 8, dadurch gekennzeichnet, daß die Luftdüsen (178) in mindestens zwei verschiedenen Ebenen übereinander am Zwischenbehälter (102) angeordnet sind, wobei die dem Injektionsventil (111) nächstliegenden Luftdüsen (178) etwa im unteren Viertel oder Drittel bevorzugt in unmittelbarer Nähe des Injektionsluftstromes angeordnet und die darüber befindlichen Luftdüsen (178) etwa im Mittenbereich des Zwischenbehälters (102) vorgesehen sind.

10. Vorrichtung nach einem der Ansprüche 7 bis 9, dadurch gekennzeichnet, daß die zu den Luftdüsen (178) des Zwischenbehälters (102) führende Druckleitung (168) an einem den das Substrat beschleunigenden Druckluftstrom (181) freigebenden und absperrenden Ventil (142) angeschlossen ist, und zwar vorzugsweise derart, daß das Ventil (142) für die Druckleitung (168) und Luftdüsen (178) des Zwischenbehälters (102) über die Hubstange (120) des die Staudruckkammer (140) begrenzenden Kolbens (135) bei in der Staudruckkamer (140) abfallendem Druck und sich öffnendem Injektionsventil (111) zur Freigabe des Druckluftstromes (181) in die Öffnungsposition bringbar ist.

11. Vorrichtung nach einem der Ansprüche 7 bis 10, dadurch gekennzeichnet, daß das Ventil für den in den Zwischenbehälter (102) einzubringenden Druckluftstrom (181) als Kolbenschieberventil (142) ausgebildet ist, das eine in einem Gehäuse (158) axial verschiebbare Kolbenstange (159) aufweist, die mit der Hubstange (120) gekoppelt ist, wobei vorzugsweise das Kolbenschieberventil (142) mit der Kolbenstange (159) koaxial über der Hubstange (120) des die Staudruckkammer (140) beinhaltenden druckluftbetriebenen Zylinders (134) angeordnet ist.

12. Vorrichtung nach einem der Ansprüche 7 bis 11, dadurch gekennzeichnet, daß das Kolbenschieberventil (142) koaxial im Gehäuse (158) eine Eingangskammer (163) mit einem Lufteinlaß (165) für die Zuluft (166) und eine Ausgangskammer (164) mit einem Luftauslaß (167) aufweist, an dem sie zu den Luftdüsen (178) führende Druckleitung (168) angeschlossen ist, daß die Eingangskammer (163) und die Ausgangskammer (164) etwa in der Mitte des Gehäuses (58A) durch eine die Kolbenstange (159) umschließende Dichtung (69A) getrennt sind, und daß die die beiden Kammern (63A, 64A) axial durchsetzende Kolbenstange (159) einen den Stangenquerschnitt verringernden Verjüngungsteil (170) aufweist, der in der Verschlußposition des Kolbenschieberventils (142) sich ausschließlich innerhalb der Eingangskammer (163) befindet und in der Öffnungsposition nach der Axialverschiebung der Kolbenstange (159) für den Luftdurchgang durch die Dichtung (169) hindurch in die Ausgangskammer (164) mit hineinragt.

13. Vorrichtung insbesondere nach einem der Ansprüche 7 bis 12, dadurch gekennzeichnet, daß in den Innenraum (115) des Zwischenbehälters (102), vorzugsweise in dessen Oberteil (104) zum Aufbau eines vor dem Öffnen des Injektionsventils (111) das Substrat in Richtung zum Druckluftauslaß (113) hin beaufschlagenden Überdrucks ein an einer Überdruckleitung (183) angeschlossener Lufteinlaß (182) einmündet.

14. Vorrichtung nach einem der Ansprüche 7 bis 13, dadurch gekennzeichnet, daß das Ventil (185) der Überdruckleitung (183) mit dem 5/2-Wegeventil (153) für die Druckluft zum Aufbrechen des Bodens gekoppelt als Folgeventil (193) ausgeführt ist, wobei vorzugsweise das Ventil (185) einen Bedienungshebel (186) aufweist und über ein Gestänge (192) mit einem Öffner (196) des Wegeventils (153) so verbunden ist, daß bei einem ersten Öffnungsweg (197) des Bedienungshebels (186) für den Aufbau des Überdrucks im Zwischenbehälter (102) das 5/2-Wegeventil (153) geschlossen bleibt, und daß bei einem sich anschließenden zweiten Öffnungsweg (198) des Bedienungshebels (186) das Ventil (185) noch weiter und das Wegeventil (153) für den Aufbruch des Boden sich öffnen.

15. Verfahren zum Aufbrechen pflanzenbaulich genutzten Bodens mit einer in den Boden einzuführenden Sonde mit Sondenrohr (8, 108) und einem diesen zugeordneten Innenrohr (7, 107), durch welche unter Zwischenschaltung eines Schnellschlußventiles (19, 119) Druckluft stoßartig in den Boden eingebracht und unmittelbar anschließend an den Aufbruch ein Substrat in die aufgebrochenen Hohlräume zu ihrer Verbauung eingespeist wird, und bei dem die jeweils einzubringende Substratmenge nach dem Aufbrechen des Bodens von der Druckluft injektorartig mitgerissen wird, wobei ein den Substratstoß freigebendes Injektionsventil (11, 111) abhängig vom durch den Aufbruch bedingten Druckabfall und unter Einwirkung des Staudruckes einer Staudruckkammer (40, 140) eines Druckluftzylinders (34, 134) freigegeben wird, dadurch gekennzeichnet, daß zur Erhöhung der Sensibilität der druckabhängigen Steuerfunktionen zusätzlich Druckluft in die Staudruckkammer (40, 140) des Druckluftzylinders (34, 134) geleitet wird, die beim Rückstau einen schnellen Druckaufbau ermöglicht, und die zusätzliche Druckluft in den den Boden aufbrechenden Druckluftstoß zugegeben wird und wobei die in die Staudruckkammer (40, 140) eingeleitete zusätzliche Druckluft im wesentlichen gleichzeitig mit der durch das Schnellschlußventil (19, 119) einströmenden Druckluft in das Innenrohr (7, 107) des Sondenrohes (8, 108) gelangt.

16. Verfahren nach Anspruch 15, dadurch gekennzeichnet, daß die in die Staudruckkammer (40, 140) des Druckluftzylinders (34, 134) zusätzlich eingeleitete Druckluft bis nahe an das Innenrohr (7, 107) des Sondenrohres (8) getrennt von der durch das Schnellschlußventil (19) einströmenden Druckluft separat geführt wird.

17. Verafhren nach einem der Ansprüche 15 oder 16, dadurch gekennzeichnet, daß die untere Arbeitskammer (36, 136) des Druckluftzylinders (34, 134) und die untere Druckkammer (30, 130) des Pneumatikzylinders (28, 128) über einen sich verzweigenden Druckluftimpuls eines Ventils (53, 153) gemeinsam derart angesteuert bzw. mit Druckluft beaufschlagt werden, daß der Druckaufbau in der Arbeitskammer (36, 136) des Druckluftzylinders (34, 134) so lange verzögert wird, bis der vor dem Durchbruch der Druckluft zur Atmosphäre im Innenrohr (7, 107) des Sondenrohres (8, 108) entstehende Staudruck in der oberen Staudruckkammer (40, 140) des Druckluftzylinders (34, 134) den für den sicheren Verschluß des Injektionsventils (11, 111) erforderlichen Druck aufgebaut hat, der dieses so lange zuverlässig verschlossen hält, bis er nach dem Durchbruch der Druckluft zur Atmosphäre absinkt und aus dem Innenrohr (7, 107) des Sondenrohre (8, 108) entweicht.

18. Verfahren nach einem der Ansprüche 15 bis 17, dadurch gekennzeichnet, daß nach dem Aufbrechen des Bodens beim Öffnen des Injektionsventils (111) das Substrat durch einen zusätzlichen Druckluftstrom (181) beschleunigt und mit hohem Druck und hoher Geschwindigkeit in die durch die Sonde (108) in den Boden einströmende Druckluft eingetragen wird, wobei vorzugsweise die Beschleunigung des Substrates durch den zusätzlichen Druckluftstrom (181) ventilgesteuert bei in der Staudruckkammer (140) abfallendem Druck ausgelöst wird.

19. Verfahren nach einem der Ansprüche 15 bis 17, dadurch gekennzeichnet, daß vor dem Öffnen des Injektionsventils (111) das Substrat mit Überdruck beaufschlagt wird, dessen Druckhöhe mindestens der Druckhöhe eines beim Öffnen des Injektionsventils (111) der Injektionsströmung entgegengerichteten Gegendrucks aus dem Innenrohr (107) der Sonde (108) entspricht, wobei vorzugsweise die Beaufschlagung des Substrates mit dem Überdruck zeitlich kurz vor dem Öffnen des Injektionsventils (111) erfolgt, und daß die stoßartige Freisetzung der Druckluft in den Boden unmittelbar nach dem Erreichen des Überdrucks ausgelöst wird.

**Revendications**

1. Dispositif pour le défonçage d'un sol cultivé, comprenant une sonde comportant un tube intérieur (7, 107), pouvant être mise en place dans le sol, une vanne à air comprimé à fermeture rapide (19, 119) couplée à un cylindre pneumatique (28, 128), dans la région supérieure, laquelle commande l'air comprimé amené du compresseur pour de défonçage du sol, et une soupape d'injection (11, 111) dans la région inférieure d'un réservoir intermédiaire de substrat (2, 103) en liaison avec le tube intérieur (7) de la sonde, un tube injecteur (14, 114) conduisant de la vanne à fermeture rapide (19, 119) à la soupape d'injection (11, 111), qui est reliée par l'intermédiaire d'une tige creuse (20, 30, 51; 120, 139, 151) au piston (35, 135) d'un second cylindre à air comprimé (34, 134) et est en relation de transmission d'air, pour une libération retardée dans le temps de la soupape d'injection (11, 111), avec une chambre de pression dynamique (40, 140) de ce second cylindre (34, 134), et comprenant des conduites de pression de commande (45, 46, 47; 145, 146, 147) raccordées aux deux cylindres (28, 34; 128, 134), caractérisé en ce qu'une conduite d'air comprimé (48, 148) comportant une vanne pilote (49, 149) est raccordée à la chambre de pression dynamique (40, 140) du second cylindre à air comprimé (34, 134), la vanne pilote pouvant être actionnée par l'intermédiare d'une autre conduite de pression de commande (50, 150), par laquelle la vanne pilote (49, 149) reçoit son impulsion de commande pour l'ouverture de la conduite de pression (48, 148) simultanément à l'ouverture de la vanne à air comprimé à ouverture rapide (19, 119).

2. Dispositif selon la revendication 1, caractérisé en ce que la conduite de pression de commande (50, 150) de la vanne pilote (49, 149) est raccordée, conjointement à la conduite de pression de commande (45, 145) conduisant à la chambre de pression (30, 130) du cylindre pneumatique (28, 128) et à la conduite de pression de commande (47, 147) de la chambre de travail (36, 136) du cylindre à air comprimé (34, 134), à une sortie (52, 152) d'un distributeur à 4 voies (53, 153), sur laquelle est aussi disposée, sur un départ différent (54, 154), la conduite de pression de commande (46, 146) de la chambre de contre-pression (31, 131) du cylindre pneumatique (28, 128).

3. Dispositif selon l'une des revendications 1 et 2, caractérisé en ce qu'à la chambre de pression dynamique (40, 140) du cylindre à air comprimé (34, 134) est associée une conduite de détection de pression (51, 151) s'étendant en direction du tube de sonde (8, 108) au moins jusque dans la région du réservoir intermédiaire (2, 102).

4. Dispositif selon l'une des revendications 1 à 3, caractérisé en ce que la conduite de détection de pression (51, 151) est sous forme d'un prolongement de la conduite d'air (39, 139) qui est en relation avec la chambre de pression dynamique (40, 140) du cylindre à air comprimé (34, 134) et de préférence de telle sorte qu'elle est disposée dans le prolongement de la conduite d'air (39, 139) dans le tube injecteur (14, 114) et s'étend dans le prolongement de la conduite d'air (39, 139) dans le tube injecteur (14, 114) jusqu'à la sortie d'air comprime (13, 113) de celui-ci au siège de soupape (12, 112) de la soupape d'injection (11, 111).

5. Dispositif selon l'une des revendications 1 à 4, caractérisé en ce que, pour un ajustement optimal dans le temps de la montée en pression dans la chambre de travail (36, 136), il est prévu dans la conduite de pression de commande (47, 147) qui y amène une soupape de temporisation (55, 155) qui comporte un corps de soupape (60) chargé par une force élastique réglable pour l'amenée d'air et un élément de soupape (61) sollicité par une force élastique plus faible pour l'échappement de l'air en retour.

6. Dispositif selon l'une des revendications 1 à 5, caractérisé en ce qu'à un ressort de retenue (77) monté dans une tige de piston (32, 132) conduisant au cône de soupape (21, 121) de la soupape à fermeture rapid (19, 119) est associé un ressort pneumatique (71, 156) qui est raccordé à la conduite de pression de commande (46, 146) conduisant à la chambre de contre-pression (31, 131) du cylindre pneumatique (28, 128) et comporte, dans un espace sous pression (72) de la tige de piston (32), sur un tige (20, 120) conformée en conduite d'air, un piston (73), et sur une admission d'air (74) reliée à la chambre de contre-pression (31, 131), une bague d'étanchéité (75) du type soupape anti-retour, de préférence de telle sorte que la bague d'étanchéité (75) dans l'espace sous pression (72) de la tige de piston (32, 132), à l'admission d'air (74), présente une section à peu près en forme de V, entoure la tige (20, 120) et présente à l'ouverture du V un plateau d'appui (76) pour le ressort de retenue (77), et qu'au piston (73), dans l'espace sous pression (72), est également associée une bague d'étanchéité (78) à section en forme de V en position inversée et un plateau d'appui (79) pour l'autre extrémité du ressort de retenue (77).

7. Dispositif, en particulier selon l'une des revendications 1 à 6, caractérisé en ce que dans l'espace intérieur (115) du réservoir intermédiaire (102), pour l'introduction d'un courant d'air comprimé supplémentaire (181) pour la sortie accélérée du substrat quand la soupape d'injection (111) est ouverte, débouchent une et de préférence deux buses d'air ou davantage (178) raccordées à une conduite sous pression (168) (figure 5).

8. Dispositif selon la revendication 7, caractérisé en ce que la sortie (179) de la buse d'air (178) pour le courant d'air comprimé (181) est tournée vers le jet d'air comprimé s'écoulant librement dans le réservoir, de préférence de telle sorte que la sortie (179) de la buse d'air (178) est disposée à proximité de la surface interne (180) du réservoir intermédiaire (102) et de façon que le courant d'air comprimé (181) dirigé vers la soupape d'injection (111) soit orienté à peu près parallèlement à la surface interne (180).

9. Dispositif selon l'une des revendications 7 et 8, caractérisé en ce que les buses d'air (178) sont disposées sur le réservoir intermédiaire (102) les unes au-dessus des autres dans au moins deux plans différents, les buses d'air (178) les plus proches de la soupape d'injection (111) étant disposées à peu près dans le quart ou le tiers inférieur, de préférence à proximité immédiate du courant d'air d'injection, et les buses d'air (178) situées au-dessus étant prévues à peu près dans la région médiane du réservoir intermédiaire (102).

10. Dispositif selon l'une des revendications 7 à 9, caractérisé en ce que la conduite sous pression (168) conduisant aux buses d'air (178) du réservoir intermédiaire (102) sont raccordées à une soupape (142) libérant et interrompant le courant d'air comprimé (181) qui accélère le substrat, et de préférence de telle sorte que la soupape (142) pour la conduite sous pression (168) et les buses d'air (178) du réservoir intermédiaire (102) peut être amenée dans la position d'ouverture pour la libération du courant d'air comprimé (181) par l'intermédiaire de la tige (120) du piston (135) délimitant la chambre de pression dynamique (140) lorsque la pression décroît dans cette dernière et que la soupape d'injection s'ouvre.

11. Dispositif selon l'une des revendications 7 à 10, caractérisé en ce que la soupape pour le courant d'air comprimé (181) à introduire dans le réservoir intermédiaire (102) est sous forme d'un robinet à piston (142), qui comporte une tige de piston (159) pouvant coulisser axialement dans un corps (158) et qui est couplée à la tige (120), le robinet à piston (142) avec sa tige de piston (152) étant de préférence disposés coaxialement au-dessus de la tige (120) du cylindre à air comprimé (134) comprenant la chambre de pression dynamique (140).

12. Dispositif selon l'une des revendications 7 à 11, caractérisé en ce que le robinet à piston (142) comporte coaxialement dans le corps (158) une chambre d'entrée (163) avec une entrée d'air (165) pour l'air amené (166) et une chambre de sortie (164) avec une sortie d'air (167), à laquelle est raccordée la conduite d'air (168) menant aux buses d'air (178), que la chambre d'entrée (163) et la chambre de sortie (164) sont séparées, à peu près au centre du corps (58A), par un joint d'étanchéité (69A) entourant la tige de piston (159), et que la tige de piston (159) traversant axialement les deux chambres (63A, 64A) présente une partie amincie (170) réduisant la section de la tige et qui dans la position de fermeture du robinet à piston (142) se trouve exclusivement à l'intérieur de la chambre d'entrée (163) et dans la position d'ouverture après le déplacement axial de la tige de piston (159) fait saillie dans la chambre de sortie (164) à travers le joint (169) pour le passage de l'air.

13. Dispositif, en particulier selon l'une des revendications 7 à 12, caractérisé en ce qu'une entrée d'air (182) raccordée à une conduite de surpression (183) débouche dans l'espace interne (115) du réservoir intermédiaire (102) de préférence dans sa partie supérieure (104), pour l'établissement d'une surpression appliquée au substrat en direction de la sortie d'air comprimé (113), avant l'ouverture de la soupape d'injection (111).

14. Dispositif selon l'une des revendications 7 à 13, caractérisé en ce que la soupape (185) de la conduite de surpression (183) est réalisée en tant que soupape séquentielle (193) couplée au distributeur à quatre voies (153) pour l'air comprimé de défonçage du sol, la soupape (185), de préférence, présentant un levier de manoeuvre (186) et étant reliée par une tringlerie (192) à un organe d'ouverture (196) du distributeur (153) de telle sorte que lors d'une première course d'ouverture (197) du levier de manoeuvre (186) pour l'établissement de la surpression dans le réservoir intermédiaire (102) le distributeur à quatre voies (153) reste fermé, et que lors d'une seconde course d'ouverture subséquente (198) du levier de manoeuvre (198) la soupape (186) s'ouvre encore davantage et le distributeur (153) s'ouvre pour le défonçage du sol.

15. Procédé pour le défonçage d'un sol agricole au moyen d'une sonde à mettre en place dans le sol, comprenant un tube de sonde (8, 108) et un tube intérieur (7, 107) associé à celui-ci, par lequel, avec interposition d'une vanne à fermeture rapide (19, 119), de l'air comprimé est introduit par à-coups dans le sol, et immédiatement après le défonçage un substrat est amené dans les espaces creux résultant du défonçage pour les boucher, et dans lequel des quantités de substrat à introduire à chaque coup après le défonçage du sol sont entraînées par l'air comprimé à la manière d'un injecteur, une soupape d'injection (11, 111) qui libère le jet de substrat étant déclenchée en fonction de la chute de pression occasionnée par le défonçage et sous l'effet de la pression dynamique d'une chambre de pression dynamique (40, 140) d'un cylindre à air comprimé (34, 134), caractérisé en ce que, pour accroître la sensibilité des fonctions de commande dépendant de la pression, de-l'air comprimé est conduit en supplément dans la chambre de pression dynamique (40, 140) du cylindre à air comprimé (34, 134), qui permet une montée en pression rapide lors du reflux, et l'air comprimé supplémentaire est ajouté au jet d'air comprimé qui défonce le sol, l'air comprimé supplémentaire introduit dans la chambre de pression dynamique (40, 140) parvenant dans le tube intérieur (7, 107) du tube de sonde (8, 108) sensiblement en même temps que l'air comprimé s'écoulant à travers la vanne à fermeture rapide (19, 119).

16. Procédé selon la revendication 15, caractérisé en ce que l'air comprimé introduit en supplément dans la chambre de pression dynamique (40, 140) du cylindre à air comprimé (34, 134) est conduit séparément de l'air comprimé s'écoulant à travers la vanne à fermeture rapide (19) jusqu'à proximité du tube intérieur (7, 107) du tube de sonde (8).

17. Procédé selon l'une des revendications 15 et 16, caractérisé en ce que la chambre de travail inférieure (36, 136) du cylindre à air comprimé (34, 134) et la chambre de pression inférieure (30, 130) du cylindre pneumatique (28, 128) sont déclenchées ou alimentées en air comprimé en commun par une impulsion d'air comprimé qui bifurque, de telle sorte que la montée en pression dans la chambre de travail (36, 136) du cylindre à air comprimé (34, 134) est retardée jusqu'à ce que la pression dynaue apparaissant dans la chambre de pression dynamique supérieure (40, 140) du cylindre à air comprimé (34, 134) avant l'irruption de l'air comprimé à l'atmosphère dans le tube intérieur (7, 107) du tube de sonde (8, 108) ait établi la pression nécessaire pour la fermeture sûre de la soupape d'injection (11, 111), laquelle pression maintient celle-ci fermée de façon sûre jusqu'à ce qu'elle décroisse après l'irruption de l'air comprimé à l'atmosphère et s'échappe hors du tube intérieure (7, 107) du tube de sonde (8, 108).

18. Procédé selon l'une des revendications 15 à 17, caractérisé en ce qu'après le défonçage du sol, lors de l'ouverture de la soupape d'injection (111), le substrat est accéléré par un courant d'air comprimé additionnel (181) et inséré sous pression élevée et à vitesse élevée dans l'air comprimé qui s'écoule à travers la sonde (108) dans le sol, l'accélération du substrat étant de préférence déclenchée par le courant d'air comprimé additionnel (181) sous la commande d'une soupape lors de la chute de pression dans la chambre de pression dynamique (140).

19. Procédé selon l'une des revendications 15 à 17, caractérisé en ce qu'avant l'ouverture de la soupape d'injection (111) le substrat est alimenté en surpression, dont la valeur de pression correspond au moins à la valeur de pression d'une contre-pression provenant du tube intérieur (107) de la sonde (108) et dirigé contre le courant d'injection lors de l'ouverture de la soupape d'injection (111), le substrat étant de préférence soumis à la surpression peu de temps avant l'ouverture de la soupape d'injection (111), et que la libération par à-coups de l'air comprimé dans le sol est déclenchée immédiatement après que la surpression est atteinte.

**Claims**

1. Apparatus for breaking up soil for agricultural use with a probe which has an internal tube (7, 107) and is able to be inserted into the soil, a compressed air quick-action stop valve (19, 119) connected to the piston (29, 129) of a pneumatic cylinder (28, 128) in the upper part, said quick-action stop valve regulating the compressed air fed by the compressor for the breaking up of the soil, and an injection valve (11, 111) in the lower part of a substrate intermediate receiver (2, 103) connected to the internal tube (7) of the probe, an injector tube (14,114) passing from the quick-action stop valve (19, 119) to the injection valve (11, 111), said injector tube being connected via a hollow lifting rod (20, 39, 51; 120, 139, 151) to the piston (35, 135) of a second pneumatically operated cylinder (34, 134) and being connected in an air conducting manner to a dynamic pressure chamber (40, 140) of the second cylinder (34, 134) for a time-delayed release of the injection valve (11, 111), and with control pressure lines (45, 46, 47; 145, 146, 147) connected to both cylinders (28, 34; 128, 134), characterised in that a compressed air line (48, 148) with a pilot valve (49, 149) is connected to the dynamic pressure chamber (40, 140) of the second compressed air cylinder (34, 134), said pilot valve being actuatable via a further control pressure line (50, 150), through which the pilot valve (49, 149) receives its control pulse for the opening of the pressure line (48, 148) simultaneously with the opening of the compressed air quick-action stop valve (19, 119).

2. Apparatus according to claim 1, characterised in that the control pressure line (50, 150) of pilot valve (49, 149), in common with the control pressure line (45, 145) leading to the pressure chamber (30, 130) of pneumatic cylinder (28, 128) and the control pressure line (47, 147) of the working chamber (36, 136) of compressed air cylinder (34, 134), is connected to an outlet (52, 152) of a 5/2-way valve (53, 153), there being provided on the latter at a further outlet (54, 154) the control pressure line (46, 146) of the back-pressure chamber (31, 131) of pneumatic cylinder (28, 128).

3. Apparatus according to either one of claims 1 or 2, characterissd in that a pressure-sensing line (51, 151) leading in the direction of the probe tube (8, 108) at least into the area of the intermediate receiver (2, 102) is assigned to the dynamic pressure chamber (40, 140) of the compressed air cylinder (34, 134).

4. Apparatus according to any one of claims 1 or 3, characterised in that the pressure-sensing line (51, 151) is designed as an extension of air line (39, 139) connected to the dynamic pressure chamber (40, 140) of the compressed air cylinder (34, 134), and preferably in such a way that it is provided as an extension of air line (39, 139) in the injector tube (14, 114) and is led as an extension of air line (39, 139) in injector tube (14, 114) up to its air pressure outlet (13, 113) on the injector valve seat (12, 112) of the injection valve (11, 111).

5. Apparatus according to any one of claims 1 or 4, characterised in that a time-delay valve (55, 155) is provided in the control pressure line (47, 147) leading to the working chamber (36, 136) for an optimally synchronisable pressure build-up in said working chamber, whereby said time-delay valve has a valve body (60) loaded with an adjustable spring load for the air supply, and a valve part (61), actuated with only a slight spring load, for the escape of the air back-flow.

6. Apparatus according to any one of claims 1 or 5, characterised in that a pneumatic spring (71, 156) is assigned to a retaining spring (77) supported in a piston rod (32, 132) leading to the valve cone (21, 121) of the quick-action stop valve (19, 119), said pneumatic spring being connected to control pressure line (46, 146) leading to the back-pressure chamber (31, 131) of pneumatic cylinder (28, 128), and having a piston (73) in a discharge chamber (31, 131) of the piston rod (32) on a lifting rod (20, 120) designed as an air line, and seal ring (75), in the manner of a non-return valve, on an air inlet (74) connected to the back-pressure chamber (31, 131), preferably in such a way that the seal ring (75) has an approximately V-shaped cross-section in the discharge chamber (72) of the piston rod (32, 132) on the air inlet (74), that it surrounds the lifting rod (20, 120) and has a supporting plate (76) for the retaining spring (77) on the V-opening, and the piston (73) in the discharge chamber (72) is also assigned a seal ring (78), with a V-shaped cross-section, in the reverse position and a supporting plate (79) for the other end of the retaining spring (77).

7. Apparatus, especially according to any one of claims 1 to 6, characterised in that at least one, and preferably two or more air nozzles (178) connected to a pressure line (168) emerge in the interior (115) of the intermediate receiver (102) for introducing an additional flow (181) of compressed air for a delivery of substrate which is accelerated when the injection valve (111) is open (Fig. 5).

8. Apparatus according to claim 7, characterised in that the outlet (179) of the air nozzle (178) for the flow (181) of compressed air is turned towards the jet of compressed air flowing freely in the receiver, preferably in such a way that the outlet (179) of the air nozzle (178) is positioned close to the internal surface (180) of the intermediate receiver (102) such that the flow (181) of compressed air directed towards the injection valve (111) is aligned approximately parallel to the internal surface (180).

9. Apparatus according to either one of claims 7 or 8, characterised in that the air nozzles (178) are arranged on the intermediate receiver (102) in at least two different levels one on top of the other, whereby the air nozzles (178) lying closest to the injection valve (111) are arranged roughly in the lower quarter or third preferably in the immediate vicinity of the flow of injection air, and the air nozzles (178) located above the aforesaid air nozzles are provided roughly in the middle region of the intermediate receiver (102).

10. Apparatus according to any one of claims 7 to 9, characterised in that the pressure line (168) leading to the air nozzles (178) of the intermediate receiver (102) is connected to a valve (142) which shuts off and releases the flow (181) of compressed air which accelerates the substrate, and preferably in such a way that the valve (142) for the pressure line (168) and the air nozzles (178) of the intermediate receiver (102) can be brought into the open position by means of the lifting rod (120) of the piston (135) limiting the dynamic pressure chamber (140) in the presence of a falling pressure in the dynamic pressure chamber (140) and the opening of the injection valve (111) for the purpose of releasing the flow (181) of compressed air.

11. Apparatus according to any one of claims 7 to 10, characterised in that the valve for the flow (181) of compressed air to be introduced into the intermediate receiver (102) is designed as a piston slide valve (142), which has a piston rod (159) axially displaceable in a housing (158), said piston rod (159) being coupled with the lifting rod (120), whereby the piston slide valve (142) with the piston rod (159) is preferably arranged coaxially via the lifting rod (120) of the pneumatically operated cylinder (134) containing the dynamic pressure chamber (140).

12. Apparatus according to any one of claims 7 to 11, characterised in that the piston slide valve (142) has, coaxially in the housing (158), an input chamber (163) with an air inlet (165) for the supply air (166) and an outlet chamber (164) with an air outlet (167), to which the pressure line (168) leading to the air nozzles (178) is connected, that the inlet chamber (163) and the outlet chamber (164) are separated roughly in the middle of the housing (58A) by a seal (69A) surrounding the piston rod (159), and that the piston rod (159) axially running through the two chambers (63A, 64A) has tapered part (170) reducing the rod cross-section, said tapered part being located exclusively inside the inlet chamber (163) when the piston slide valve (142) is in the closed position and projecting into the outlet chamber (164) in the open position after the axial displacement of the piston rod (159) for the air passage through the seal (169).

13. Apparatus, especially according to any one of claims 7 to 12, characterised in that an air inlet (182) connected to an over-pressure line (183) emerges in the interior (115) of the intermediate receiver (102), preferably in its upper part (104), for the purpose of building up an over-pressure which pressurises the substrate in the direction of the compressed air outlet (113) before the injection valve (111) is opened.

14. Apparatus according to any one of claims 7 to 13, characterised in that the valve (185) of the over-pressure line (183), connected to the 5/2-way valve (153) for the compressed air for breaking up the soil, is designed as a sequence valve (193), whereby the valve (185) preferably has an operating lever (186) and is connected via a linkage (192) to an opened (196) of the directional control valve (153) in such a way that the 5/2-way valve (153) remains closed in a first opening path (197) of the operating lever (186) for the build-up of the over-pressure in the intermediate receiver (102), and that in a following second opening path (198) of the operating lever (186) the valve (185) opens still further and the directional control valve (153) opens for the breaking up of the soil.

15. Process for the breaking up of soil for agricultural use with a probe to be inserted in the soil, said probe having a probe tube (8, 108) and an internal tube (7, 107) assigned to the latter, through which probe compressed air is fed into the soil in an pulsed manner by incorporating a quick-action stop valve (19, 119) and immediately after the breaking up of the soil a substrate is fed into the cavities thus broken open to block them up, and whereby the given quantity of substrate to be introduced is entrained by the compressed air in an injection-like manner after the soil has been broken up, whereby an injection valve (11, 111) releasing the substrate pulse is triggered subject to a fall in pressure caused by the breaking up of the soil and under the effect of the dynamic pressure of a dynamic pressure chamber (40, 140) of a compressed air cylinder (34, 134), characterised in that, for the purpose of increasing the sensitivity of the pressure-dependent control functions, compressed air is additionally fed into the dynamic pressure chamber (40, 140) of the compressed air cylinder (34, 134), which enables a rapid pressure build-up with the back pressure, and the additional compressed air is added into the compressed air pulse breaking up the soil and whereby the additional compressed air fed into the dynamic pressure chamber (40, 140) enters the internal tube (7, 107) of the probe tube (8, 108) essentially simultaneously with the compressed air flowing in through the quick-action stop valve (19, 119).

16. Process according to claim 15, characterised in that the compressed air additionally introduced into the dynamic pressure chamber (40, 140) of the compressed air cylinder (34, 134) is fed separately from the compressed air flowing in through the quick-action stop valve (19) until close to the internal tube (7, 107) of the probe tube (8).

17. Process according to either one of claims 15 or 16, characterised in that the lower working chamber (36, 136) of the compressed air cylinder (34, 134) and the lower pressure chamber (30, 130) of the pneumatic cylinder (28, 128) are controlled or pressurised in common by a branching compressed air pulse of a valve (53, 153) in such a way that the pressure build-up in the working chamber (36, 136) of the compressed air cylinder (34, 134) is delayed until the dynamic pressure in the upper dynamic pressure chamber (40, 140) of the compressed air cylinder (34, 134) arising before the break-through of the compressed air to the atmosphere in the internal tube (7, 107) of the probe tube (8, 108) has built up the pressure required for the safe closure of the injection valve (11, 111), said pressure holding the latter securely shut until it falls after the break-through of the compressed air to the atmosphere and escapes from the internal tube (7, 107) of the probe tube (8, 108).

18. Process according to any one of claims 15 to 17, characterised in that, after the breaking up of the soil when the injection valve (111) is opened, the substrate is accelerated by an additional flow (181) of compressed air and is carried at high pressure and at high speed into the compressed air flowing into the soil through the probe (108), whereby the acceleration of the substrate by the additional flow (181) of compressed air is preferably controlled by valve with falling pressure in the dynamic pressure chamber (140).

19. Process according to any one of claims 15 to 17, characterised in that before the injection valve (111) is opened the substrate is pressurised, its pressure level at least corresponding to the pressure level of a back-pressure from the internal tube (107) of the probe (108) exerted in the opposite direction to the injection flow when the injection valve (111) is opened, whereby the pressurisation of the substrate preferably takes place shortly before the injection valve (111) is opened, and that the pulsed release of the compressed air into the soil is triggered immediately after the pressurisation is established.

# Fig.1

# Fig.2

# Fig.3

Fig. 4

Fig. 5

# Fig.6